# EUROPEAN PATENT APPLICATION

(11) **EP 4 528 266 A1**
(43) Date of publication of application: **26.03.2025**
(21) Application number: 23315366.7
(22) Date of filing: 25.09.2023
(51) Int. Cl.: G01N 29/02, G01N 29/036, G01N 29/22, H01M 10/52

(54) **ADVANCED CELL FOR ELECTROCHEMICAL CHARACTERIZATION OF BATTERY INTERFACE VIA EQCM**

(71) Applicant: Centre National de la Recherche Scientifique, 75016 Paris (FR); College de France, 75005 Paris (FR); SORBONNE UNIVERSITE, 75006 Paris (FR)
(72) Inventor: Tarascon, Jean-Marie, 75014 Paris (FR); Sel, Ozlem, 75013 Paris (FR); Bendadesse, Ezzoubair, 75019 Paris (FR); Travers, Pascal, 91220 Le Plessis Pâté (FR)
(74) Representative: Brevalex

(57) **Abstract**

The invention concerns a test cell for an EQCM of an electrochemical system comprising a liquid electrolyte. It comprises:
- a cell body (10) comprising an electrolyte cavity (11), a quartz resonator (12) coated with a first working electrode (FW) with an active material to be tested and being configured to provide a signal function of a mass variation of the first working electrode (FW),
- a cell basis (20) comprising a connecting terminal (22) receiving the signal from the quartz resonator (12),

The test cell (8) also comprises a cell holder (30), comprising:
- a second electrolyte cavity connecting with the first electrolyte cavity,
- a second working electrode, connected to the quartz resonator through the first and second electrolyte cavity (11), comprising similar material to the active material to be tested,
- a counter electrode connected to the quartz resonator through the first and second electrolyte cavities (11).

## Description

The invention relates to the field of characterization of electrochemical systems. The invention is particularly adapted for experimental analysis of electrochemical systems/cells, such as rechargeable batteries or non-rechargeable batteries.

The different technologies of electrochemical energy storage have recently been subject to extensive searches, in several application fields, for example transportation (electrical vehicles) and wearable electronic devices. Therefore, there is a constant need to develop and to test new materials or new assemblies for the electrodes or for the electrolyte of the battery.

In particular, lithium ion batteries meet the requirements of the aforementioned applications fields, because of their high energy density. Many laboratory researches currently focus on the lithium-ion technology (Li-ion), so as to increase autonomy, lifetime, security (e.g, by minimizing the risk of Li plating) or miniaturization demands of the embedded systems.

. Moreover, the performance behaviour of Li-ion batteries (and their characterization) is highly influenced by the operating conditions. At least for these two reasons, it is required, for laboratory work, to use a glove box under controlled rare gas atmosphere (argon), with an oxygen and moisture level inferior to a predefined threshold, about 1 ppm.

Working in a glove box yields a high investment cost in comparison to other energy storage technologies (e.g., lead acid and nickel metal hydride (NiMH) batteries): even after the assembly of the battery, whenever a characterization of a battery has to be done, the laboratory technician uses the glove box, which is a costly equipment. Laboratories may be equipped with several glove boxes, so as to make extended tests on several batteries.

The Electrochemical Quartz Crystal Microbalance (EQCM) technique is a common tool, with a very high accuracy, for the characterization of electrochemical system.

An EQCM is a set of devices capable of measuring in particular (but not limited to) a mass variation by monitoring the resonance frequency variation generated by the piezoelectric effect of a quartz crystal. The resonator, usually made of a quartz crystal, is coated on both sides with conducting metal which supports one of the electrodes, called working electrode, where the mass variation is probed. A counter (auxiliary) and a reference electrode is used to perform an EQCM measurement as in a typical three electrode system.

The EQCM set-up also comprises:
- a potentiostat which generates a DC voltage or a current to induce an electrochemical reaction (*e.g.* lithium insertion) at the electrode level.
- an oscillating circuit for selecting a desired frequency and oscillating at said desired frequency (most common and mature method as disclosed by Johannsmann D. The Quartz Crystal Microbalance in Soft Mater Research, Springer Publishing (2015), pp 23),
- a frequency counter for measuring a frequency change occurring on the working electrode,
- a processing unit for processing the output digital signals,
- a PC for controlling the potentiostat, for acquiring the current and voltage provided by the potentiostat, and for acquiring the frequency from the frequency meter.

When a voltage is applied between the electrodes (battery is charging or discharging), the value of the resonance frequency changes due to the variation of the mass of the working electrode.

The amount of substance to be accumulated on the working electrode, and therefore the mass of the working electrode, is calculated by initially measuring the resonant frequency of the bare quartz crystal and the lowering of the resonant frequency after deposition of the electrode. During the electrochemical reaction, the (dis)insertion of ions also changes the frequency response of the quartz and the amount of ions inserted can be determined.

An introduction to the EQCM technique is disclosed in the document "The EQCM: electrogravimetry with a light touch" (A. Robert Hillman, J Solid State Electrochem (2011)).

It is known, from the document "In-situ EQCM Study Examining Irreversible Changes the Sulfur-Carbon Cathode in Lithium-Sulfur Batteries" and supporting information (H.-L. Wu et al., ACS Applied Materials and Interfaces, 7 (37) 20820-20828 (2015)), an EQCM cell is reported to perform measurements involving air-sensitive electrodes/electrolytes. The cell is partially filled with a liquid electrolyte. A working electrode (the quartz crystal coated with the material of choice), a counter electrode and a reference electrode (both Li foil) are immersed in the electrolyte. The cell is maintained under a positive pressure of Argon, so as to avoid any air inlet. The cell includes a circuit for circulating water around the cell for temperature regulation. The water inlet and outlet, as well as the argon inlet and outlet, are arranged laterally. The electrodes are immersed in the electrolyte from a superior surface of the cell. The disclosed EQCM cell is not satisfactory. Firstly, the design of the cell does not reproduce the arrangement of the battery in operational conditions: in the cell, the electrodes are arranged side by side (immersed from the top of the cell), whereas, in operational conditions, the electrodes face each other with a minimal distance in between the electrodes. Secondly, the argon and water circuits make the cell cumbersome: whenever the laboratory technician moves the cell, for example to bring it back into the glove box, he must also move the argon and water sources. Lastly, the disclosed cell requires a large quantity of electrolyte, so that the electrodes may be immersed, which is not optimized.

It is also known, from the document "Operando EQCM-D with Simultaneous in Situ EIS: New Insights into Interphase Formation in Li Ion Batteries" (P.G. Kitz et al. Analytical Chemistry, 91 2296-2303 (2019 ))', a cell which combines EIS (Electrochemical Impedance Spectroscopy) and multiharmonic EQCM-D (EQCM with dissipation monitoring) functions, in a coin-cell-type Li-ion cell configuration. In the cell, the electrodes are arranged one to the other in a realistic configuration.

However, to evaluate the performance of battery systems under diverse cut-off voltages and current densities, it is preferable to use Galvanostatic Charge Discharge (GCD) techniques, as they will enable a direct correlation between EQCM measurements and the phenomena observed in charge-discharge profiles further mimicking real-life battery assessment.

Yet, in the cell provided in Kitz et al. the working electrode is a porous electrode of 12mm in diameter which is pulverized on a 50 µm thick current-collector stainless steel mesh or directly on a separator. The mass of such an electrode therefore cannot be quantified as it is either unknown or at best inaccurate. As such, this device makes it challenging to use Galvanostatic Charge Discharge (GCD) techniques, which is the electrochemical process employed to gauge battery performance in real conditions, since knowing the mass of the electrode is essential to calculate the current applied in a GCD but also to balance the mass ratio between positive and negative electrode which in this case might prove impossible. Moreover, the mass loading is too low and makes it further challenging to operate a slow-rate GCD.

It is also known from EP 3757062 a test cell for the EQCM-characterization of an electrochemical system comprising a cell body intended to hold the electrolyte, a cell basis comprising a quartz resonator intended to support a working electrode for providing a signal function of a mass variation of the working electrode, and a cell hood housing a counter-electrode. However, this device does not solve the issues of the device disclosed in Kitz et al. In addition, due to a high electrolyte to electrode mass ratio involved in this device, parasitic reactions may arise which interfere with the current and frequency measurements. Such a test cell also does not allow testing a full cell configuration.

Moreover, the small quantities of active material on the quartz (~5-40 µg/cm² range) requires currents in the range of nanoamperes, particularly for slow rates such as C/10 or C/20. Hence, parasitic currents arising from electrical components can overwhelm the imposed current, leading to experiment failure.

Therefore, there exists a need to get as close as possible to real-world battery test conditions. Whilst prior art's main purpose was to probe solid electrolyte interface (SEI) formation and perform electrogravimetric analysis in model electrode electrolyte combinations, the evolution of user needs requires more realistic battery-interface characterization.

The invention aims to fulfil that purpose and overcome the aforementioned drawbacks.

To that end, the invention is directed to a test cell for an electrochemical quartz crystal microbalance-characterization of an electrochemical system comprising a liquid electrolyte, comprising :
- a cell body comprising an electrolyte cavity extending through the cell body along a longitudinal axis of the body, said first electrolyte cavity housing the electrolyte, a quartz resonator disposed at an end of the first through-opening , the quartz resonator being coated with a first working electrode with an active material to be tested and being configured to provide a signal function of a mass variation of the first working electrode,
- a cell basis configured to be assembled with the cell body along said longitudinal axis, and comprising a connecting terminal, said connecting terminal being electrically connectable to the quartz resonator for receiving the signal from the quartz resonator,
   **characterized in that** it also comprises a cell holder, configured to be assembled with the cell body along the longitudinal axis, comprising:
   - a second electrolyte cavity extending through the cell body along the longitudinal axis, connecting with the first electrolyte cavity,
   - a second working electrode, connected to the quartz resonator through the first and second electrolyte cavity, comprising similar material to the active material to be tested,
   - a counter electrode of the electrochemical system, connected to the quartz resonator through the first and second electrolyte cavities.

The test cell according to the invention allows the use of commercial electrodes/electrolyte, separators and a compartment for a QCM (first working) electrode. By introducing a second working electrode and connecting it to the quartz resonator coated with the same active material, it is possible to simulate the electrochemical reactions occurring at the level of real, commercial-grade electrodes, without being limited to test electrodes. The previous designs made the use of commercial-grade electrodes not possible.

The test cell according to the invention therefore offers electrochemical conditions similar to what is found in a real electrochemical system, such as the distance between electrodes, a minimal quantity of electrolyte, hermeticity, and most of all allows for the use of GCD techniques. Indeed, employing real electrodes in junction with the active material on the QCM electrode enables the use of Galvanostatic Charge Discharge techniques. The test cell according to the invention also allows the testing of a full cell configuration.

According to a preferred embodiment, the first and second working electrodes are electrically connected. This will allow to link the mass variation of the quartz to be linked to the electrochemical reactions within the active material to be tested.

According to a preferred embodiment, in order to facilitate the integration of commercial-grade electrodes, the second working electrode is coated onto aluminium or copper foil.

Preferably, the second working electrode is a composite electrode comprising the active material, a linking polymer, preferably Polyvinylidene fluoride and a conductive additive, preferably carbon black. In the present disclosure, an active material should be understood as a material into which ions can be reversibly intercalated . An example of such a material is LiFePO₄.

Advantageously, the second working electrode is arranged on a stainless-steel mesh. This avoids the disruption of ionic flow from the second working electrode to the quartz resonator.

According to a preferred embodiment, the cell body and the cell holder are screwed together in a hermetically sealed manner. This avoids any leakage of the electrolyte.

According to a preferred embodiment, the test cell further comprises a cell separator, configured to be assembled to the cell holder along the longitudinal axis, the cell separator preferably being made of polytetrafluoroethylene (PTFE).

Preferably, the counter electrode is separated from the cell separator by a spacer connected to a spring connected to the cell separator. The spacer and spring apply pressure to the counter electrode, which improves the contact between the electrodes and the separator and further reduces the distance between counter and the second working electrodes.

According to a preferred embodiment, the test cell also comprises a cell hood, configured to be assembled to the cell separator along the longitudinal axis. The cell hood protects the inside of the test cell and improves the sealing.

In order to ensure the sealing of the test cell, the cell basis, cell body, cell holder, cell separator and cell hood include screwing through-holes extending through them and are connected and held together by screws inserted in said screwing through-holes.

Preferably, the counter electrode and the second working electrode are separated by at least one electrode separator made of polypropylene (PP) allowing the transfer of ions. This avoids an electrolyte breakoff during cell operation by avoiding the absorption of electrolyte by the separator. The use of a PP separator, such as those manufactured by Celgard^{©}, used in real batteries, is an improvement compared to separators made of glass fibers.

According to a second embodiment, a second quartz resonator is arranged in the second electrolyte cavity such that it is located above the counter electrode and in contact with the electrolyte, the second quartz resonator being coated with a third working electrode with the active material to be tested and being configured to provide a signal function of a mass variation of the third working electrode.

By incorporating a second QCM resonator on top of the counter electrode, the mass variation on the second electrode can be easily detected and thus a complete EQCM study on the full cell battery can be performed more easily. This design can open-up new sensing possibilities and enable accurate deconvolution of ion (dis)insertion and aging processes happening at the interface.

Preferably, a second stainless steel mesh is disposed on top of the counter electrode in contact with said counter electrode, such that it is located under the second quartz resonator.

The invention also concerns a system for electrochemical quartz crystal microbalance-characterization, comprising a test cell according to the invention, a frequency meter connected to the connecting terminal, and a potentiostat configured for controlling and measuring the voltage difference between the counter electrode and the quartz resonator supporting the first working electrode and between the counter electrode and the second working electrode.

### Brief description of the Figures

- Figures 1 is an exploded perspective view and an assembled view of the test cell according to a first embodiment of the invention,
- Figure 2 is an exploded perspective view of the cell body cell of Figure 1,
- Figure 3 is an exploded perspective view of the cell body and the cell holder of Figure 1,
- Figure 4 is a side, partly exploded view of the test cell of Figure 1.
- Figure 5 is a view of a cross-section of the test cell of Figure 1,
- Figure 6 is schematic view of a system for electrochemical quartz crystal microbalance-characterization, comprising the test cell of Figure 1,
- Figure 7 is a schematic cross-section of a test cell according to a second embodiment of the invention.
- Figure 8A is a graph showing the potential profile during charge and discharge of an LiFePO₄//Li half cell with the corresponding mass variation on the LiFePO₄ -coated quartz electrode during the same cycle, obtained with a test cell according to the prior art ;
- Figure 8B is a graph similar to the one of Figure 8A obtained with a test cell according to the invention using graphite as a counter electrode in a full-cell configuration.
- Figures 9A and 9B are graphs similar to Figure 8Bfor a sodium vanadium fluorophosphates (NVPF) and hard carbon (HC) full cell with the corresponding mass variation on the NVPF (Figure 9A) and HC (Figure 9B) electrodes.

### Detailed Description

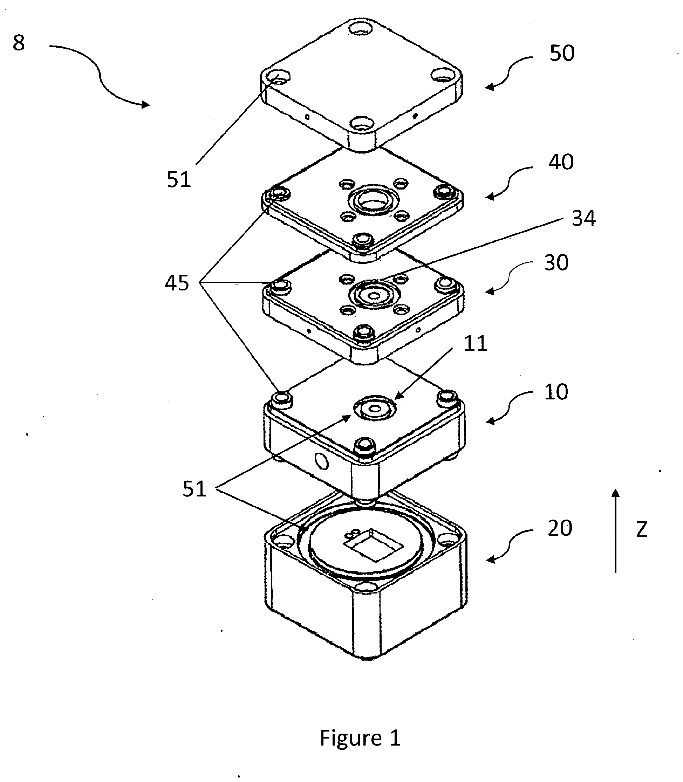

Figures 1 shows a test cell 8 according to a particular embodiment of the invention. Test cell 8 comprises five blocks: a cell body 10, a cell basis 20, a cell holder 30, a cell separator 40 a cell hood 50. The five blocks are assembled with each other along a longitudinal axis Z. More particularly, they are stacked onto each other with the cell basis 20 on the bottom, onto which the cell body 10 is placed, on top of which the cell holder 30 is placed, then the cell separator and the cell hood which forms the top cover of the cell 8. The present application, the terms "lower" and "upper" are considered relative to axis Z : along axis Z, it is considered that the cell basis 20 is below the cell body 10, which in turn is located below the cell hood 50.

The cell body 10, basis 20, holder 30, separator 40 and hood 50 preferably have a sensibly parallelepiped shape, in order to facilitate their stacking onto each other.

In a preferred embodiment, the blocks have an upper surface and a lower surface which are complementary respectively to their adjacent block. For example, the cell body 10 has an upper surface that is complementary with the lower surface of the cell holder 30 and a lower surface that is complementary with the top surface of the cell basis 20.

There is no particular requirement concerning the shape of the upper surface of the cell hood 50 and the shape of the lower surface of the cell basis 20. The lower surface of the cell basis 20 can be plane so as to facilitate its positioning on a flat surface.

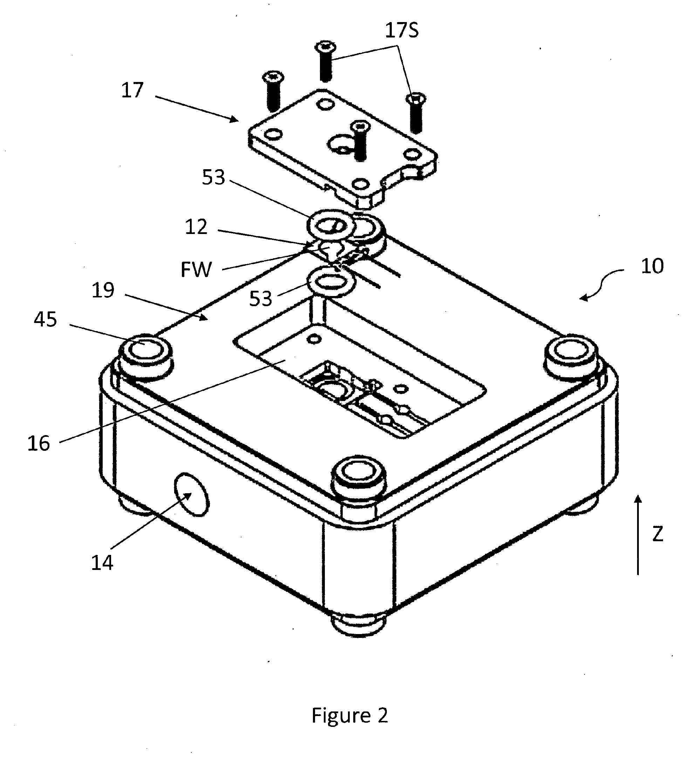

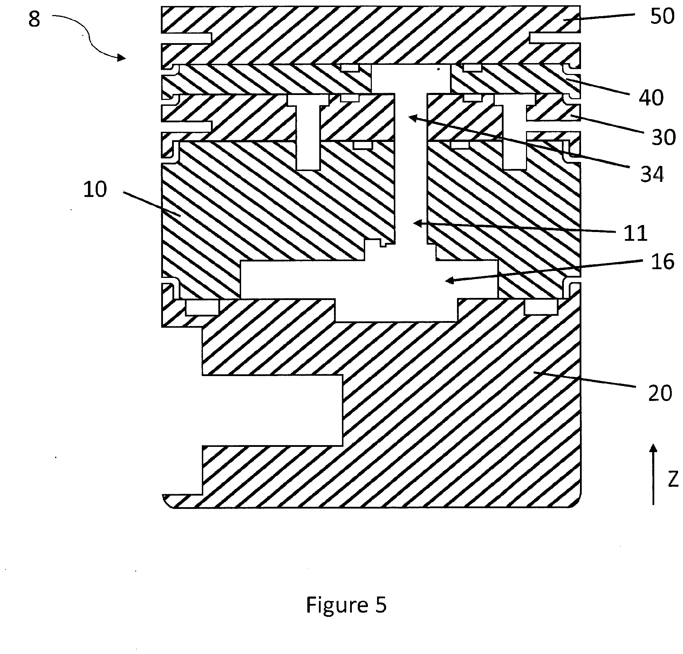

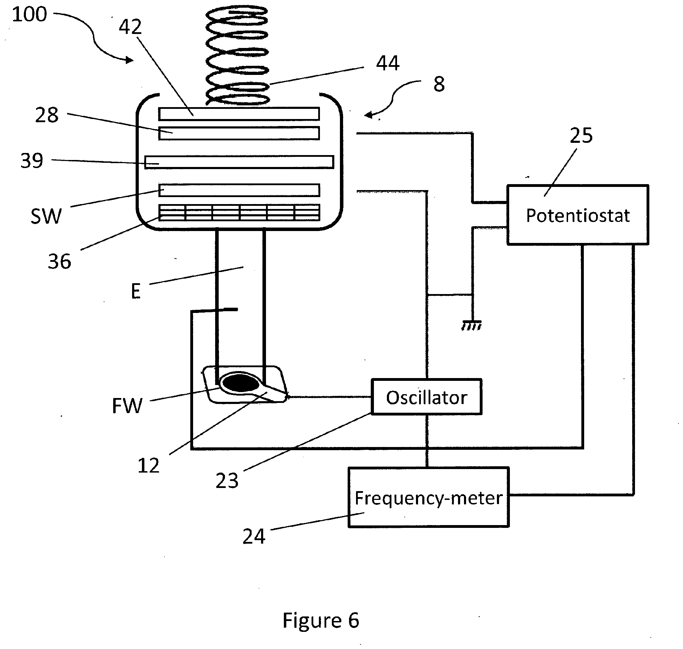

As can be seen on Figures 2 and 5, the cell, body 10 comprises a first through-opening 11 which extends through all the cell body 10. Said first through-opening, or electrolyte cavity 11, is intended to house the electrolyte E of the electrochemical system, as shown on Figure 6. The volume of the first electrolyte cavity 11 can be very limited, so as to use a very small quantity of electrolyte (in particular of organic electrolyte).

As can be seen on Figure 2, a first quartz resonator 12 is arranged at an end (the lower end) of the first electrolyte cavity 11. The quartz resonator 12 supports a first working electrode FW of the electrochemical system which is to be tested. The first working electrode FW is coated on the quartz resonator 12. The quartz resonator 12 is configured to generate a signal function of the mass variation of the first working electrode FW. As shown on Figure 6, liquid electrolyte is located in the first electrolyte cavity 11. The internal cavity has a very reduced volume. Therefore, a very small quantity of liquid electrolyte E is needed, which limits the cost of the experimentation.

A recess 16 is arranged in the cell body 10 for housing the quartz resonator 12, as illustrated in figure 2. The recess 16 may be arranged so as to exactly match the shape of the quartz resonator 12. The quartz resonators which are generally used for EQCM characterization have either a square-shaped quartz, or a circular-shaped quartz, each of them may have different configuration of electrical connections. The test cell 8 according to the invention has a modular structure. Therefore, if either of a square-shaped quartz or a circular-shaped quartz has to be employed, only the cell body 10 has to be adapted to the quartz resonator 12.

The quartz resonator 12 is maintained in the recess 16 by means of a mask 17. The mask 17 is a plate which partially covers the recess 16. The mask 17 is fixed to the cell body 10 using screws 17S.

A lateral through-opening 14, visible on Figure 2, is arranged in a side wall of the cell body 10, which extends normally to the axis Z. This lateral through-opening 14 can house an auxiliary electrode, also called reference electrode (not shown). The auxiliary electrode can be, for example, a pseudo-reference electrode, or a Luggin capillary. A potential between any of the electrodes of the test cell 8 and the auxiliary electrode can be measured and controlled. Therefore, the accuracy of the electrochemical measurements is improved.

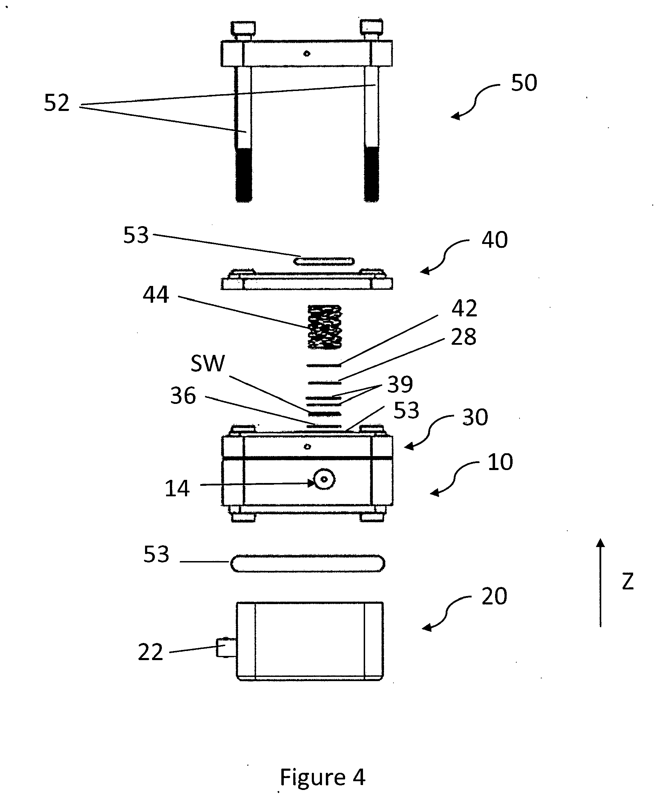

The cell basis 20 comprises a connecting terminal 22, shown on Figure 4, which is arranged on a lateral side of the cell basis 20. The connecting terminal is connected to the quartz resonator 12, when the blocks are assembled. Therefore, the signal function of the mass variation of the first working electrode FW can be transmitted to an oscillator 23 and a frequency meter 24 for determining the resonant frequency of the quartz resonator 12, and to a potentiostat 25 for controlling and measuring the voltage difference between a counter-electrode 28 and the first working electrode FW, and between the counter electrode 28 and a second working electrode SW (the counter electrode and the second working electrode SW shall be described later), as shown on the schematic EQCM system 100 of figure 6. Then, a computing unit (not shown) characterizes the electrochemical system based on the acquired data.

The cell holder 30 comprises an opening extending through the cell holder 30 along the longitudinal axis Z, called second electrolyte cavity 34, connecting with the first electrolyte cavity 11 and filled with the electrolyte E. As it can be illustrated in the cross-section view of figure 5, the second electrolyte cavity 34 and the first electrolyte cavity 11 face each other when the cell holder 30 and the cell body 10 face each other. In that way, the liquid electrolyte is maintained between the working electrode FW and the counter-electrode 28.

The cell holder 30 also comprises a second working electrode SW, connected to the quartz resonator 12 through the first 11 and second electrolyte cavity 34, comprising similar material to the active material to be tested. The second working electrode SW is inserted into the second electrolyte cavity 34. The first working electrode FW and the second working electrode SW are short-circuited as shown in figure 6. The first working electrode FW and the second working electrode SW are both connected as a single working electrode on the potentiostat 25.

The second working electrode SW is a commercial grade-electrode. It is coated onto aluminium or copper foil. It is preferably a composite electrode comprising an active material and a linking polymer, preferably polyvinylidene fluoride, and a conductive additive, preferably carbon black.

The second working electrode SW is arranged on a stainless-steel mesh 36.

The cell holder 30 also comprises a counter electrode 28. The counter electrode 28 is connected to the quartz resonator through the first 11 and second electrolyte cavities 34. The counter electrode 28 is inserted into the second electrolyte cavity 34.

The counter electrode 28 and the second working electrode SW are separated by at least one separator 39, here two separators as can be seen on Figure 4.

The cell separator 40 is preferably made of polytetrafluoroethylene (PTFE). It comprises a cavity housing to enable the addition of a spacer 42 and a spring 44. The spacer 42 and spring 44 enable the electrical connection of counter-electrode 28 to cell hood 50 and connection to the potentiostat 25 through holes drilled (XX) on the lateral sides of cell hood 50.

As shown on Figure 1, the cell body 10, the cell basis 20, the cell holder 30, the cell separator 40 and the cell hood 50 comprise a plurality of alignment elements thanks to which the five blocks which constitute the test cell are aligned one with one another. Moreover, when the blocks are aligned, the quartz resonator 12 indirectly contacts the connecting terminal 22 through contacts pins (not shown) protruding out from the cell basis 20 along the longitudinal axis Z.

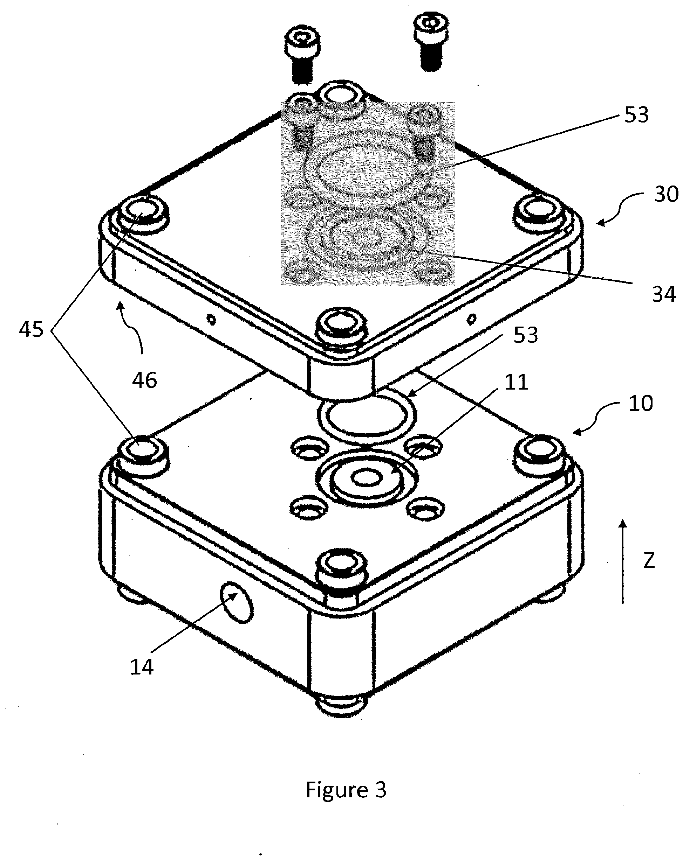

In a preferred embodiment, as can be seen on Figure 3, the alignment elements comprise a plurality of hollow pads 45 and holes 46 along the longitudinal axis Z. Each of the blocks has at least two alignment elements 45, 46, so as to avoid any rotation of a block with respect to the others, in a plane which is normal to axis Z. Of course, more than two alignment elements 45, 46 can be arranged in each block, in order to increase the accuracy of the alignment.

Furthermore, the alignment elements 45, 46 can also be used so as to fix the cell body 10, the cell basis 20, the cell holder 30, the cell separator 40 and the cell hood 50 with one another. In a preferred embodiment, the cell body 10 comprises a plurality of hollow pads 45 which protrude out of the lower and upper surface of the cell body 10 along axis Z. The alignment elements of the cell basis 20 and the alignment elements of the cell hood 50 can be holes 46 which can interlock with the hollow pads 45 in an assembled position of the test cell 8. The cell holder 30 comprises holes 46 on its lower surface which interlock with the hollow pads 45 of the cell body 10 and hollow pads 45 on its upper surface which interlock with holes 46 provided in the lower surface of the cell separator 40. The cell separator 40 comprises hollow pads 45 which interlock with holes 46 provided on the lower surface of the cell hood 50.

Preferentially, the alignment elements 45, 46 are disposed close to the edge of the blocks. For example, if the blocks are square-shaped, the alignment elements 40, 41 may be positioned in each corner.

Moreover, the cell hood 50 comprises through-holes 51 into which threaded screws 52 can be inserted. The screws 52 can be inserted into screwing through-holes provided in the hollow pads 45 so as to securely assemble basis 20, cell holder 30, cell separator and cell hood 40 the cell hood 50.

Preferably, at least one among the cell body 10, the cell basis 20, the cell holder 30 or the cell hood 50 comprises a material selected from a group comprising polyetherimide (PEI), polypropylene (PP), polyether ether ketone (PEEK), polytetrafluoroethylene (PTFE), aluminium and stainless steel. These materials are indeed resistant to organic solvents which are employed in organic electrolytes, which can be very corrosive. The blocks may be made of different materials one compared to the others (for example the cell body 10 comprises PEI, the cell basis 20 comprises PP, and the cell hood 30 comprises PEEK). However, using the same materials for all blocks imparts a chemical resistance to the test cell 8.

As an alternative, the cell body 10 may be made of metal, and may be connected to a temperature regulating device (which is not illustrated on the figures). The temperature regulating device may be embedded in the cell body 10, or may be an external component. As the resonant frequency of the quartz is strongly dependent on the temperature variation, the temperature regulating device allows to keep the temperature of the quartz constant, in order to increase the accuracy of the EQCM characterization. Therefore, in this variant, the test cell 8. Besides, the temperature regulating device allows the user to adjust the temperature of the electrolyte used in the experiment, thus to characterize the electrochemical system with different temperatures.

Since organic electrolytes are very sensitive to air exposure, it is desirable to increase the air tightness of the test cell 8. To that end, O-ring-seals 53 may be arranged at edges of the cell body 10 and/or cell basis 20 and/or cell holder 30 and/or, cell separator 40 and/or cell hood 50 in a plane normal to axis Z. A first O-ring-seal 53 may be arranged so as to closely surround an external part of the first electrolyte cavity 11, opposite to the quartz resonator 12, as shown on figures 1 and 4. A second O-ring-seal 53 may be arranged in a groove which closely surrounds the second electrolyte cavity 34. Therefore, when the cell body 10 and the cell holder 30 are assembled, the first O-ring-seal 50 contacts the cell body 10 and the cell holder 30, and the second O-ring seal 53 contacts the cell holder 30 and the cell separator 40, thus preventing avoids any leakage of the liquid electrolyte. A third O-ring seal 53 may be provided between the cell separator 40 and the cell hood 50 as can be seen on Figure 5.

A fourth O-ring-seal 53 may be arranged substantially on the inner circumference of an end surface of the cell basis 20, which is to be facing the cell body 10 in an assembled state, as illustrated by figures 1 and 3. Therefore, when the cell basis 20 and the cell body 10 are assembled, the O-ring-seal 53 contacts the cell body 10, and provides tightness between the cell basis 20 and the cell body 10. If the cell basis 20 has a square cross section, the external diameter of the second O-ring-seal 53 may fit with the inner side of the cell basis 20. Thus, any leakage of the liquid electrolyte in the holes 46 is prevented.

A fifth O-ring-seal 53 may be interposed between the quartz resonator 12 and the mask 17, and a sixth O-ring-seal 53 may be arranged around the first working electrode FW, as illustrated by figures 2. The fifth O-ring-seal 53 provides tightness between the mask 17 and the quartz resonator 12, and the sixth O-ring-seal 53 provides tightness around the first working electrode FW, i.e. enclosing the liquid electrolyte into the first electrolyte cavity 11.

Advantageously, the first, second, third, fourth, fifth and sixth O-ring-seals comprise a material selected from a group comprising nitrile, or perfluoro rubber. These materials confer flexibility to the O-ring-seals, while being resistant to organic solvents.

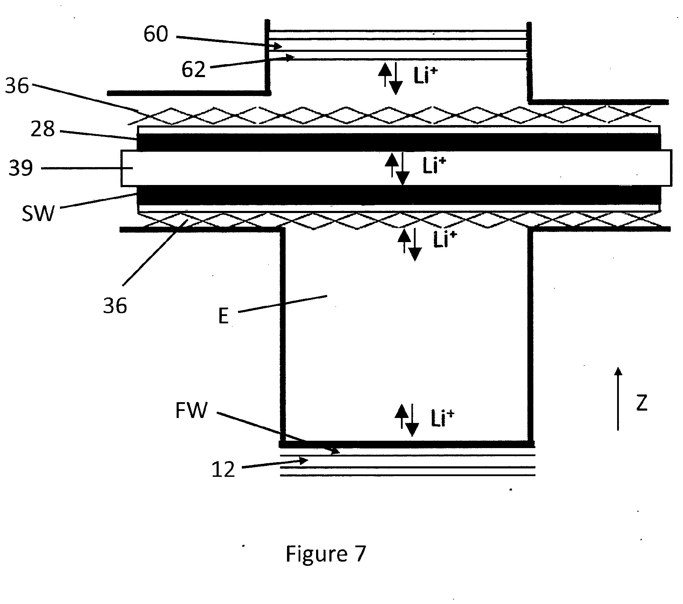

In another embodiment illustrated on Figure 7, a second quartz resonator 60 is arranged in the second electrolyte cavity 34, such that it is located above the counter electrode and in contact with the electrolyte E. The second quartz resonator 60 is coated with a third working electrode 62 with the active material to be tested and being configured to provide a signal function of a mass variation of the first counter electrode 28. in this configuration, the electrolyte E floods both electrodes.

A second stainless steel mesh 36 is disposed on top of the counter electrode 28 in contact with said counter electrode 28, such that it is located under the second quartz resonator 60.

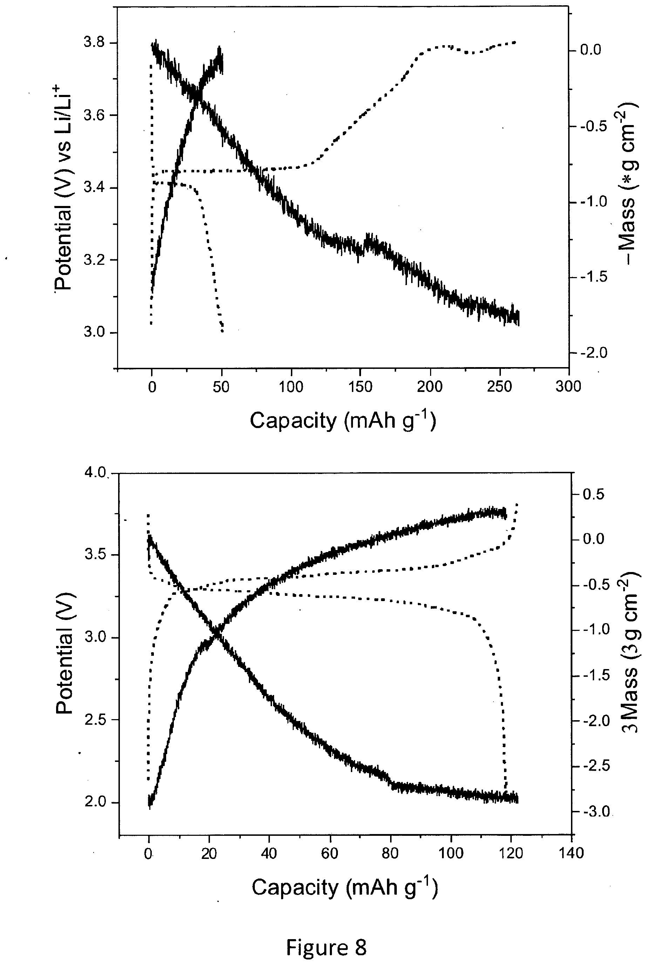

Figure 8A depicts the mass variation profile (converted from the frequency variation measured) obtained using a test cell according to prior art EP 3757062 of a commercially available Lithium Iron Phosphate (LFP) electrode operating at a C/5 rate within a LFP//Li half cell configuration. The resonator's electrode, a gold (Au) or platinum (Pt) coated Quartz resonator is coated with LiFePO₄, with mass fluctuations indicating lithium extraction and insertion during charge and discharge cycles.. On this Figure, the dashed curve shows the voltage profile of lithium insertion into LFP and the solid curve shows the mass variation of the LFP electrode. As can be seen, above 150 mAh/g, the parasitic current overtakes the imposed current, making the mass variation records have little value as they cannot be properly linked to any reaction.

On the other hand, using the test cell according to the invention, despite the relatively low current density of 34 mA g⁻¹, equivalent to a C/5 rate, the active material on the quartz resonator exhibits reversible lithium intercalation without parasitic currents interference as is the case with the test cell of the prior art design. This is illustrated by Figure 8B which depicts the mass variation profile (converted from the frequency variation measured) obtained using a test cell according to the invention of a commercially available Lithium Iron Phosphate (LFP) electrode operating at a C/5 rate within a LFP//Graphite full cell configuration. This behavior highlights the resonator's role as an extension of the working electrode within the cell.

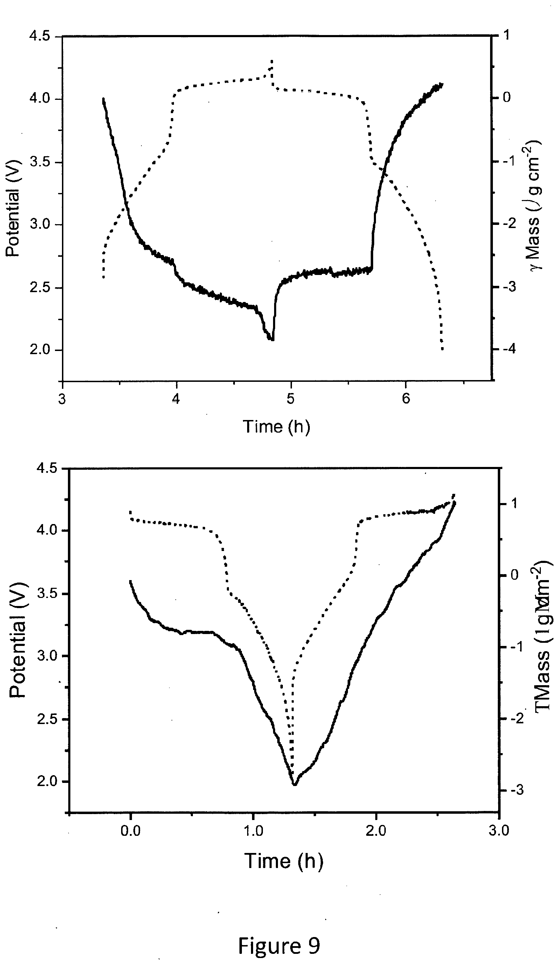

It should be noted that Na-ion commercial systems such as sodium vanadium fluorophosphates (NVPF) and hard carbon (HC) can also be investigated using the test cell according to the invention, demonstrating its versatility. Additionally, by simply coating the resonator with HC and interchanging the connections with the real counter electrode, the user can monitor mass variation on the negative electrode instead. This is illustrated by Figures 9A and B, which show the potential profile during charge and discharge of NVPF//HC full cell with the corresponding mass variation (converted from the measured frequency variation, using Sauerbrey equation) on the NVPF (a) and HC (b) electrodes. Cycle 3 and 4 are shown here for NVPF and HC, respectively.

The invention is not limited to the examples and embodiments described hereinabove. In particular, it can be applied to any electrochemical system and is not limited to Li-ion batteries, or to batteries for that matter.

### List of references

8 : Test cell
10 : Cell body
11 : First electrolyte cavity
12 : First quartz resonator
FW : First working electrode
14 : Lateral through-opening
16 : Recess
17 : Mask
17S : Mask screws
20 : Cell basis
22 : Connecting terminal
23 : Oscillator
24 : Frequency meter
25 : Potentiostat
28 : Counter electrode
30 : Cell holder
SW : Second working electrode
34 : Second electrolyte cavity
36 : Stainless steel mesh
38 : Annular lip
39 : Electrode separator
40 : Cell separator
42 : Spacer
44 : Spring
45 : Hollow pads
46 : Holes
50 : Cell hood
51 : Through holes of the hood
52 : Screws
53 : O-ring seals
60 : Second quartz resonator
62 : Third working electrode
E : Electrolyte

## Claims

1. Test cell (8) for an electrochemical quartz crystal microbalance-characterization of an electrochemical system comprising a liquid electrolyte (E), comprising :
- a cell body (10) comprising an electrolyte cavity (11) extending through the cell body (10) along a longitudinal axis (Z) of the body, said first electrolyte cavity (11) housing the electrolyte (E), a quartz resonator (12) disposed at an end of the first through-opening (11), the quartz resonator (12) being coated with a first working electrode (FW) with an active material to be tested and being configured to provide a signal function of a mass variation of the first working electrode (FW),
- a cell basis (20) configured to be assembled with the cell body (10) along said longitudinal axis (Z), and comprising a connecting terminal (22), said connecting terminal (22) being electrically connectable to the quartz resonator (12) for receiving the signal from the quartz resonator (12),
**characterized in that** it also comprises a cell holder (30), configured to be assembled with the cell body (10) along the longitudinal axis (Z), comprising :
- a second electrolyte cavity (34) extending through the cell body (10) along the longitudinal axis (Z), connecting with the first electrolyte cavity (11),
- a second working electrode (SW), connected to the quartz resonator through the first (11) and second electrolyte cavity (34), comprising similar material to the active material to be tested,
- a counter electrode (28) of the electrochemical system, connected to the quartz resonator through the first (11) and second electrolyte cavities (34).

2. Test cell (8) according to claim 1, wherein the first and second working electrodes are electrically connected.

3. Test cell (8) according to claim 1 or 2, wherein the second working electrode (SW) is coated onto aluminium or copper foil.

4. Test cell (8) according to any one of the preceding claims, wherein the second working electrode (SW) is a composite electrode comprising an active material linking polymer, preferably polyvinylidene fluoride, and conductive additive, preferably carbon black.

5. Test cell (8) according to any one of the preceding claims, wherein the second working electrode (SW) is arranged on a stainless-steel mesh (36).

6. Test cell (8) according to any one of the preceding claims, wherein the cell body and the cell holder are screwed together in a hermetically sealed manner.

7. Test cell (8) according to any one of the preceding claims, wherein it further comprises a cell separator (40), configured to be assembled to the cell holder (30) along the longitudinal axis (Z), the cell separator (40) preferably being made of polytetrafluoroethylene.

8. Test cell (8) according to claim 7, wherein the counter electrode (28) is separated from the cell separator (40) by a spacer (42) connected to a spring (44) connected to the cell separator (40), and preferably connected to cell hood (50) through spacer (42) and spring (44).

9. Test cell (8) according to claim 7 or 8, wherein it further comprises a cell hood (50), configured to be assembled to the cell separator (40) along the longitudinal axis (Z).

10. Test cell (8) according to claim 9, wherein the cell basis (20), cell body (10), cell holder (30), cell separator (40) and cell hood (50) include screwing through-holes extending through them and are connected and held together by screws (52) inserted in said screwing through-holes.

11. Test cell (8) according to any one of the preceding claims, wherein the counter electrode (28) and the second working electrode (SW) are separated by at least one electrode separator (39) made of polypropylene allowing the transfer of ions.

12. Test cell (8) according to claim 10, wherein the separator (39) is made of polypropylene.

13. Test cell (8) according to any one of the preceding claims, wherein a second quartz resonator (60) is arranged in the second electrolyte cavity (34) such that it is located above the counter electrode (28) and in contact with the electrolyte (E), the second quartz resonator (60) being coated with a first counter electrode (62) with the active material to be tested and being configured to provide a signal function of a mass variation of first counter electrode (62).

14. Test cell (8) according to claim 13, wherein a second stainless steel mesh (36) is disposed on top of the second counter electrode (28) in contact with said counter electrode (28), such that it is located under the second quartz resonator (60), without touching the surface of the quartz.

15. System (100) for electrochemical quartz crystal microbalance-characterization, comprising a test cell (8) according to any of the preceding claims, a frequency meter (24) connected to the connecting terminal (22), and a potentiostat (25) configured for controlling and measuring the voltage difference between the counter electrode (SW) and the quartz resonator (12) supporting the first (FW) working electrodes and between the counter electrode (SW) and the second working electrode (SW).
